# EUROPEAN PATENT SPECIFICATION

(11) **EP 1 580 712 B1**
(45) Date of publication and mention of the grant of the patent: **19.03.2014**
(21) Application number: 05250818.1
(22) Date of filing: 11.02.2005
(51) Int. Cl.: G09G 3/20, G09G 3/34

(54) **Electro-optical display device**
Elektrooptische Anzeigevorrichtung
Dispositif d'affichage électro-optique

(30) Priority: 19.03.2004 JP 2004081519
(43) Date of publication of application: 28.09.2005
(73) Proprietor: Seiko Epson Corporation, Shinjuku-ku Tokyo 163-0811 (JP)
(72) Inventor: Murade, Masao, c/o Seiko Epson Corporation, Suwa-shi, Nagano-ken 392-8502 (JP)
(74) Representative: Sturt, Clifford Mark

(56) References cited:
- EP-A2- 0 483 972
- EP-A2- 1 191 513
- JP-A- 11 237 611
- US-A- 5 883 609
- US-A1- 2004 004 595
- US-A1- 2004 041 765

## Description

The present invention relates to a technology for suppressing degradation of image quality in the case where data lines are driven in a block for a plurality lines.

In recent years, projectors using electro-optical panels, such as liquid crystal panels, to form small images and for amplifying and projecting the small images on a screen or a wall with an optical system have been widely used. These projectors do not have a function to form images on their own, but receive image data (or image signals) from some higher-level devices, such as PCs or television tuners. The image data designates a gray-scale level (brightness) of a pixel, and is supplied in a vertical-scanning-type manner or a horizontal-scanning-type method to pixels arranged in a matrix, so that it is desirable even for an electro-optical panel for use in a projector to be driven in these ways. Therefore, an electro-optical panel for use in a projector selects scanning lines one after another, and sequentially selects data lines one-by-one for a period where one scanning line is selected (one horizontal scanning period), and the image data is generally driven using a point sequential method, such that the image data, transformed to be suitable for driving the liquid crystal, is supplied to the selected data line.

However, recently, there has been a strong demand for high precision in response to developments in high-definition technology. High definition can be achieved by increasing the number of scanning lines and the number of data lines, and one horizontal scanning period becomes reduced due to the increase in the number of scanning lines. Furthermore, with the point sequential method, the period for selecting data lines is also reduced due to the increase in the number of data lines. For this reason, with the point sequential method, an insufficient time can be obtained to supply image signals to the data lines, as high-definition technology progresses, causing the pixels to be insufficiently written.

With the aim of overcoming the insufficient writing described above, phase expansion driving has been proposed. The phase expansion method refers to a method in which a predetermined number of the data lines (e.g., 6 data lines) are selected for every one horizontal scanning period, and image signals of the pixels corresponding to intersections of the selected scanning lines and the selected data lines are selected and extended by 6 times along the time axis to supply them to each of the 6 data lines. It has been understood that phase expansion driving is suitable for high definition since the time for supplying image signals to the data lines can be extended 6 times longer than that for the point sequential method.

However, in the phase expansion drive, a plurality of data lines are selected at the same time, resulting in degradation of image quality.

European Patent Application published as EP 1191513 discloses an active-matrix display device having the features contained in the preamble of claim 1.

US 2004/0041765 describes an LCD device comprising a line-driving circuit having a shift-register, a NAND circuit, a buffer circuit and an analog switch. A start pulse is input to the first stage of the shift register through a further switch, which determines the scanning direction of the shift register - either left to right or right to left. The outputs of the shift register are taken to the buffer circuit through the NAND circuit. The buffer-circuit output turns the analog switch ON for the sampling of video signals, which are fed to input signal lines.

US 5,883,609 describes an electro-optical device comprising the features set forth in the preamble of claim 1.

In JP 11-237611 a liquid-crystal display device is described comprising pixel electrodes for driving the liquid crystal, an output circuit which supplies a signal to drive the pixel electrodes, and a scanning circuit. The scanning circuit inputs a signal for establishing the direction of scanning and enables scanning to take place in first and second scanning directions. A shift-register is used, which comprises a number of shift-register stages. These stages constitute half-bit scan circuits. The path between adjacent such stages is connected to a single branch serving a respective switching circuit. This applies to all except the two end-stages, the outputs of which are not connected to such a branch.

The present invention has been conceived to solve the above problems, and an object of the present invention is to provide an electro-optical device and an electronic apparatus capable of suppressing degradation of image quality and displaying high image quality.

In accordance with the present invention, an electro-optical device is provided having the features set forth in claim 1.

Embodiments of the present invention will now be described by way of further example only and with reference to the accompanying drawings, in which:-
Fig. 1 is a block diagram showing an arrangement of an electro-optical device according to an embodiment of the present invention;
Fig. 2 is a block diagram showing an arrangement of an electro-optical panel for the electro-optical device shown in Fig. 1;
Fig. 3 is a diagram showing an arrangement of a pixel for the electro-optical panel shown in Fig. 2;
Fig. 4 is a diagram showing an arrangement of a shift register for the electro-optical device shown in Fig. 1;
Fig. 5 is a timing chart showing the operation of the electro-optical device shown in Fig. 1;
Fig. 6 is a timing chart showing the operation of the electro-optical device shown in Fig. 1;
Fig. 7 is a timing chart showing the operation of the electro-optical device shown in Fig. 1;
Fig. 8 is a timing chart showing the operation of the electro-optical device shown in Fig. 1;
Fig. 9 is a block diagram showing an arrangement of an electro-optical panel for an electro-optical device according to another embodiment of the present invention;
Fig. 10 is a block diagram showing an arrangement of an electro-optical panel for an electro-optical device according to another embodiment of the present invention;
Fig. 11 is a diagram showing an arrangement of a NAND circuit and a NOT circuit for the electro-optical panel according to an embodiment of the present invention; and
Fig. 12 is a diagram showing an arrangement of a projector adapted to the electro-optical device according to an embodiment of the present invention.

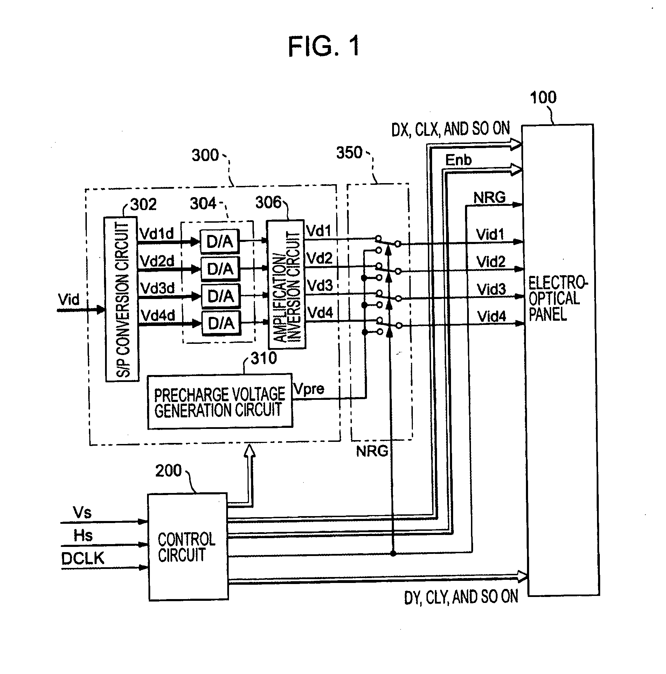

Hereinafter, an exemplary embodiment of the present invention will be described with reference to the attached drawings. Fig. 1 is a block diagram showing an overall arrangement of an electro-optical device according to an embodiment of the present invention.

As shown in Fig. 1, the electro-optical device comprises an electro-optical panel 100, a control circuit 200, and a processing circuit 300.

Among these, the control circuit 200 generates a timing signal or a clock signal for controlling each unit according to a vertical scanning signal Vs, a horizontal scanning signal Hs, and a dot clock signal DCLK, supplied from a higher-level device (not shown).

Further, the processing circuit 300 comprises an S/P conversion circuit 302, a plurality of D/A converters 304, and an amplification/inversion circuit 306.

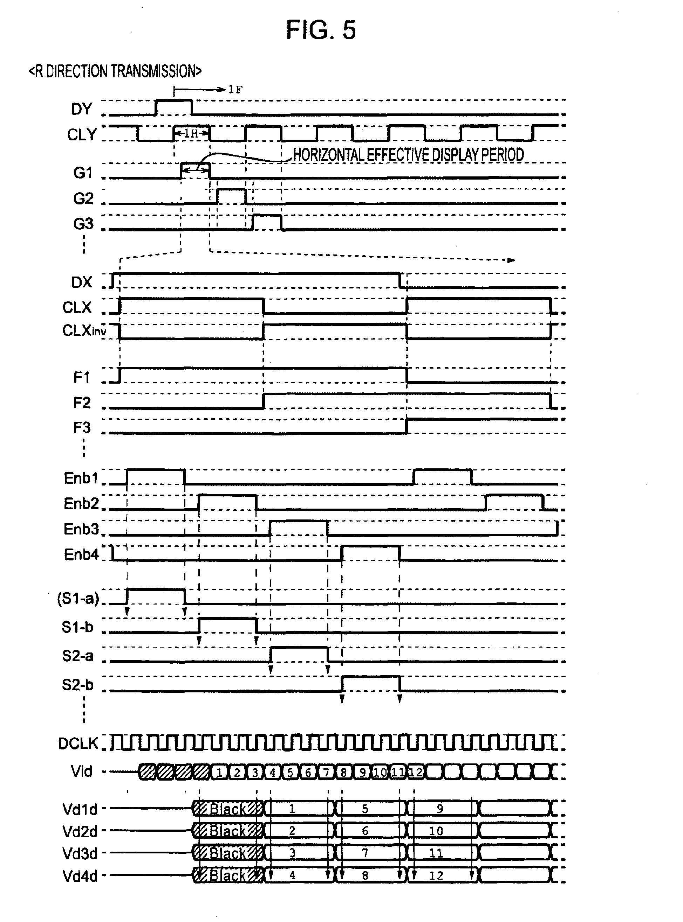

Among these, the S/P conversion circuit 302 distributes image data Vid that designate the gray levels (brightness) of the pixels supplied in series from the higher-level device as a digital value for each pixel in synchronization with the vertical scanning signal Vs, the horizontal scanning signal Hs, and the dot clock signal DCLK, into 4 systems, or channels ch1 to ch4, and extends the image data Vid by four times along the time axis (S/P conversion) to output them as image data Vd1d to Vd4d, as shown in Fig. 5. Therefore, when the image data for one pixel is supplied for one period of the dot clock signal DCLX, the extended image data Vd1d to Vd4d are respectively supplied through 4 periods of dot clocks DCLK. In addition, the serial-parallel conversion (S/P conversion) is performed to extend the time for which the image signals are applied and obtain a sample and hold time and a sufficient charging and discharging time for the sampling switch, described below.

In addition, according to the present embodiment, the S/P conversion circuit 302 outputs image data to blacken the pixels, for example, in synchronization with a selection time of the image belonging to a dummy pixel region described below.

The D/A converters 304 are D/A converters arranged for each channel ch1 to ch4, and the image data Vd1d to Vd4d convert voltages corresponding to the gray-scale levels of the respective pixels into analog image signals.

The amplification/inversion circuit 306 inverts or noninverts a polarity of the analog converted image signals using the voltage Vc as a basis, and then, amplifies and supplies them as the image signals Vd1 to Vd4 in an appropriate manner. Here, while the polarity inversion can be performed in various aspects such as those (a) for every scanning line, (b) for every data line, (c) for every pixel, and (d) for every plane (frame), an embodiment of the present invention employs polarity inversion (a) for every scanning line. However, the present invention is not limited thereto.

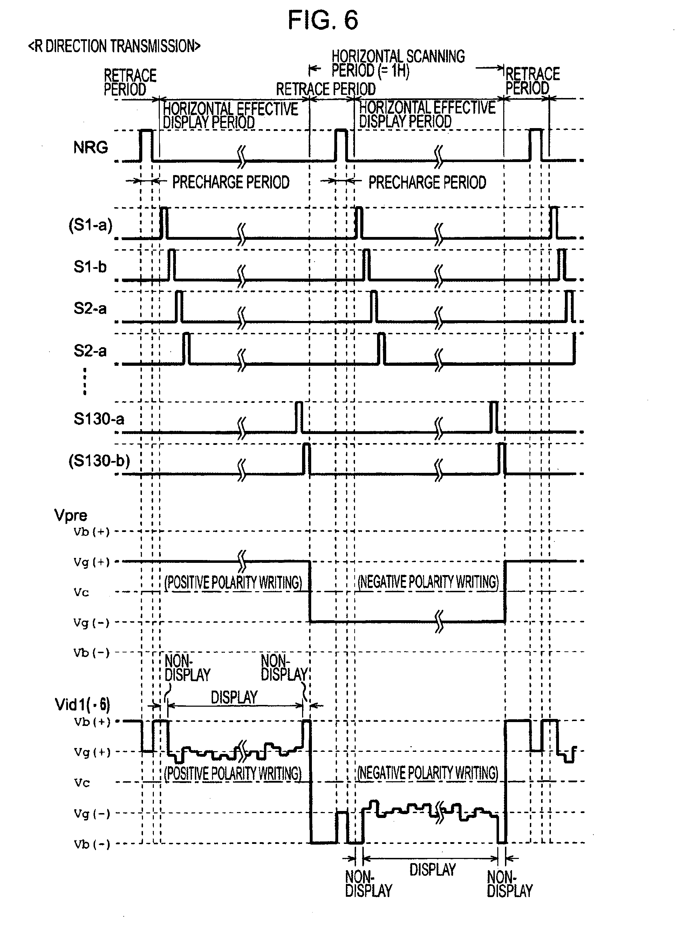

In addition, the voltage Vc is an amplitude center voltage of an image signal, as shown in Fig. 6, and is roughly the same as a voltage LCcom applied to a counter electrode. Further, according to an embodiment of the present invention, for the sake of convenience, a voltage higher than the amplitude center voltage is referred to as a positive voltage, and a voltage lower than the amplitude center voltage is referred to as a negative voltage.

A precharge voltage generation circuit 310 generates a voltage signal Vpre for precharging, for a retrace period immediately prior to sampling the image signals into the data lines. In addition, according to an embodiment of the present invention, a graying voltage (gray-like voltage) that is an intermediate value between the highest gray-scale level, or white, and the lowest gray-scale, or black, is used as a precharge voltage signal Vpre.

As described above, according to an embodiment of the present invention, the polarity is inverted every scanning line, so that, in one horizontal scanning period, positive polarity writing and negative polarity writing are alternatively performed for every one horizontal scanning period. For this reason, the precharge voltage generation circuit 310 inverts and generates the precharge voltage signal Vpre for every one horizontal scanning period to be a positive gray-like voltage Vg(+) for a retrace period immediately prior to the positive polarity writing, or to be a negative gray-like voltage Vg(-) for a retrace period immediately prior to the negative polarity writing, as shown in Fig. 6.

Returning back to Fig. 1, a selector 350 selects the image signals Vd1 to Vd4 by using the amplification/inversion circuit 306 when a signal NRG is at the L level, for example, while selecting the precharge voltage signal Vpre by using the precharge voltage generation circuit 310 when a signal NRG is at the H level, so that each selected signal is supplied to the electro-optical panel 100 as Vid1 to Vid4. Here, the signal NRG is supplied from the control circuit, and is a signal that is at the H level for a precharge period or a portion of the retrace period.

Therefore, the signals Vid1 to Vid4 become the precharge voltage signal Vpre for a precharge time where the signal NRG is at the H level, and become the image signals Vd1 to Vd4, respectively, for other periods.

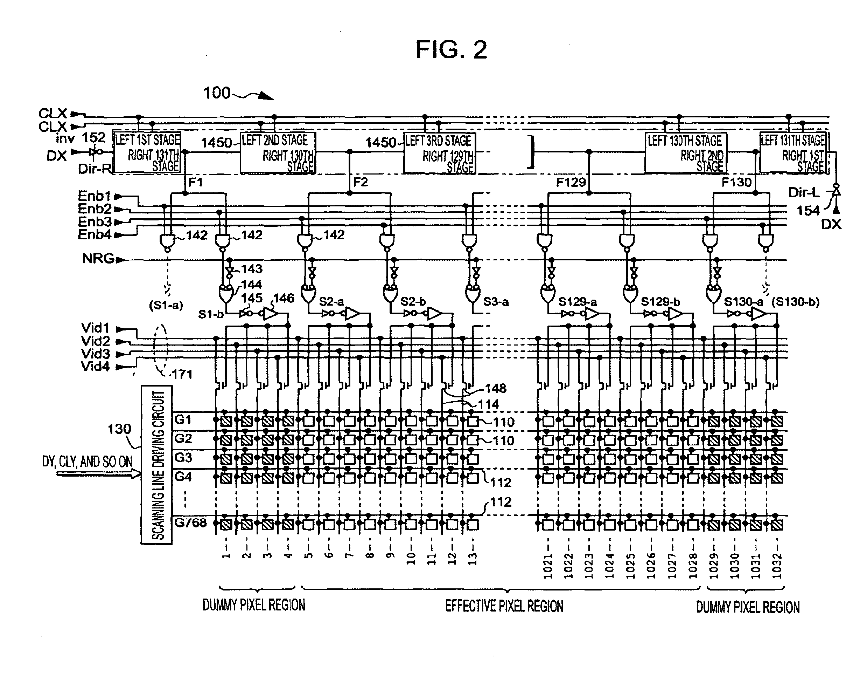

Next, a detailed arrangement of the electro-optical panel 100 will be described. Fig. 2 is a block diagram showing an electrical arrangement of the electro-optical panel 100. The electro-optical panel 100 is a liquid crystal panel in which an element substrate and a counter substrate, on which counter electrodes are provided, are attached with a gap therebetween, and liquid crystal is sealed into the gap.

In the electro-optical panel 100, as shown in Fig. 2, 768 scanning lines 112 are horizontally extended in the drawing, while 1032 (4 x 258) data lines 114 are vertically extended in the drawing. Further, pixels 110 are arranged at intersections between the scanning lines 112 and the data lines 114. Here, the pixels 110 are arranged in a matrix of 768 rows and 1032 columns. However, according to an embodiment of the present invention, the leftmost four columns and the rightmost four columns in the pixel arrangements that do not contribute to the display are used as dummy pixel regions. For this reason, according to an embodiment of the present invention, a display contributing region or an effective pixel region is 768 rows and 1024 columns corresponding to a region excluding the four leftmost columns and the four rightmost columns.

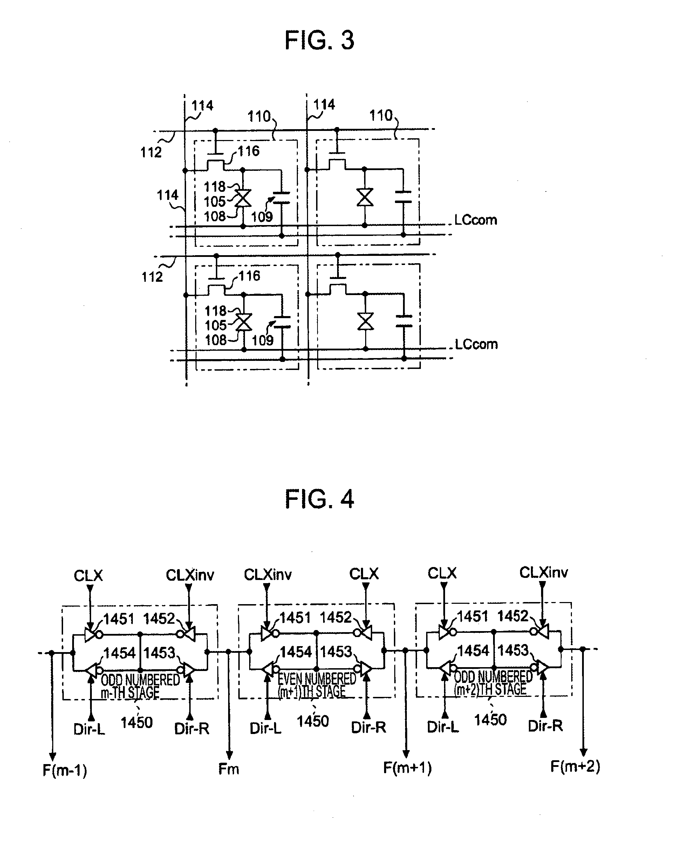

Next, a detailed arrangement of the pixel 110 will be described with reference to Fig. 3.

As shown in Fig. 3, for the pixel 110, an N-channel TFT (thin film transistor) 116 has a source connected to a data line 114, a drain connected the pixel electrode 118, and a gate connected to the scanning line.

In addition, the counter electrode 108 is commonly arranged for all pixels to face the pixel electrode 118, and a liquid crystal layer 105 is interposed between the pixel electrode 118 and the counter electrode 108. For this reason, a liquid crystal capacitor comprises the pixel electrode 118, the counter electrode 108, and the liquid crystal layer 105, for each pixel.

In addition, though not specifically shown, on each facing surface of both substrates, a rubbing-processed alignment film is arranged such that a long axis direction of the liquid crystal molecules are tilted, for example, about 90 degrees between both substrates, while a polarizer is arranged on each opposing side of both substrates, according to the direction of alignment.

Light transmitted between the pixel electrode 118 and the counter electrode 108 is rotated about 90 degrees as the liquid crystal molecules are tilted when the effective voltage of the liquid crystal capacitance is zero, while the liquid crystal molecules are tilted in the direction of an electric field as the applied the effective voltage grows. As a result, optical rotation disappears. Therefore, for a transmissive type, in the case of a normally white mode in which polarizers having polarizing axes corresponding to the alignment direction are arranged on the incident side and the opposing side, when the effective voltage of the liquid crystal capacitor is zero, the light transmittance becomes the maximum to perform white display, whereas, as the effective voltage grows larger, the amount of light is reduced, resulting in the minimum transmission or black display.

In addition, to prevent charge leakage in the liquid crystal capacitor, a storage capacitor 109 is arranged for every pixel. One end of the storage capacitor 109 is connected to the pixel electrode 118 (drain of the TFT 116), while the other end thereof is commonly grounded through all pixels.

Referring still to Fig. 2, around the effective pixel region and the dummy pixel region, peripheral circuits, such as a scanning line driving circuit 130 or a shift register 140, are arranged. Among these, the scanning line driving circuit 130 supplies scanning signals G1, G2, G3, ..., and G768 that are at the L level only for one horizontal effective display period one after another to 1st, 2nd, 3rd, ..., and 768th rows of the scanning lines, respectively, as shown in Fig. 5. In addition, a detailed description on the scanning line driving circuit 130 is omitted since it is not relevant to the present invention, but the scanning line driving circuit 130 has an arrangement such that a waveform shaping process is performed, for example, a transmission start pulse DY first supplied in one vertical scanning period 1F is shifted each time a level of a clock signal CLY transits (up or down), and then, reduces the pulse width to be output as the scanning signals G1, G2, G3, ..., and G768.

Next, the shift register 140 refers to 131 stages of latch circuits 1450 connected in series, for transmitting the transmission start pulses DX one after another, according to a clock signal CLX having a duty ratio of almost 50%, and a clock signal CLXinv having a logical inversion relationship with respect to the clock signal CLX. Here, the transmission start pulse DX is supplied at the start time of one horizontal scanning period, referring to a signal having a pulse width (a period for an H level) of almost one period of the clock signal CLX.

A shift register 140 has an arrangement such that the transmission start pulse can be transmitted either in the right direction (R direction or clockwise direction) or in the left direction (L direction or counterclockwise direction). Signals Dir-R, Dir-L, having logic levels exclusive with each other designate the transmission direction, and transmission in the R direction is indicated when the signal Dir-R is at the H level (when the signal Dir-L is at the L level) while transmission in the L direction is indicated when the signal Dir-L is at the H level (when the signal Dir-R is at the L level).

In the R direction transmission, the latch circuit 1450 uses the left end as an input and the right end as an output. Thus, in the latch circuit 1450, the left 1st stage, left 2nd stage, ..., and left 130th stage, and left 131st stage are represented from the left of the drawing one after another. In the R direction transmission, the signals F1, F2, ..., F130 are output from the left 1st stage, left 2nd stage, ..., left 130th stage of the latch circuit 1450, respectively.

In contrast, in the L direction transmission, the latch circuit 1450 uses the right end as an input and the left end as an output. Thus, in the latch circuit 1450, the right 1st stage, right 2nd stage, ..., and right 130th stage, and right 131st stage are represented from the left of the drawing one after another. In the L direction transmission, the signals F130, F129, ..., F1 are output from the right 1st stage, right 2nd stage, ..., right 130th stage of the latch circuit 1450, respectively.

In addition, the left 2nd stage of the latch circuit 1450 is the same as the right 130th stage of the latch circuit 1450, for example. Therefore, according to an embodiment of the present invention, if a stage is an even numbered stage in the R direction transmission (counting from the left), the stage is an even numbered stage in an odd numbered stage between and the L direction transmission (counting from the right), and likewise, if a stage is an odd numbered stage in the R direction transmission (counting from the left), the stage is an odd numbered stage in an odd numbered stage between and the L direction transmission (counting from the right).

A clocked inverter 152 supplies the transmission start pulse DX as an input to the left 1st stage of the latch circuit 1450 only in the R direction transmission where the signal Dir-R is at the H level. Further, a clocked inverter 154 supplies the transmission start pulse DX as an input to the right 1st stage of the latch circuit 1450 only in the R direction transmission where the signal Dir-L is at the H level.

Here, the latch circuit 1450 of the shift register 140 will be described in detail with reference to Fig. 4. Fig. 4 is a diagram showing an arrangement comprising three stages, or an odd numbered mth stage of the latch circuit 1450, an even numbered (m+1)th stage of the latch circuit 1450, and an odd numbered (m+2)th stage of the latch circuit 1450.

Every latch circuit 1450 has four clocked inverters 1451 to 1454. Among these, for the odd numbered stage of the latch circuit 1450, the clocked inverter 1451 inverts a logic level of the input signal when the clock signal CLX is at the H level, and makes the output a high impedance when the clock signal CLX is at the L level, while the clocked inverter 1452 inverts a logic level of the input signal when the clock signal CLXinv is at the H level, and makes the output a high impedance when the clock signal CLXinv is at the L level. Further, the clocked inverter 1453 inverts a logic level of the input signal when the clock signal Dir-R is at the H level, and makes the output a high impedance when the clock signal Dir-R is at the L level, while the clocked inverter 1454 inverts a logic level of the input signal when the clock signal Dir-L is at the H level, and makes the output a high impedance when the clock signal Dir-L is at the L level.

For the even numbered stage of the latch circuit 1450, it is opposite to the odd numbered one in terms of the supply relation between the clocked inverters 1451 and 1452 and the clock signals CLX and CLXinv. For this reason, for the even numbered stage of the latch circuit 1450, the clocked inverter 1451 inverts a logic level of the input signal when the clock signal CLXinv is at the H level, and makes the output a high impedance when the clock signal CLXinv is at the L level, while the clocked inverter 1452 inverts a logic level of the input signal when the clock signal CLX is at the H level, and makes the output a high impedance when the clock signal CLX is at the L level. In addition, the clocked inverters 1453 and 1454 do not have any difference between the odd numbered stage and the even numbered stage.

The shift register 140 has an arrangement in which the odd numbered stage of the latch circuit 1450 and the even numbered stage of the latch circuit 1450 are alternately connected.

With the arrangement described above, in the R direction transmission, the output of the clocked inverter 1454 is a high impedance throughout all stages, so that it is electrically negligible, while the clocked inverter 1453 is a simple NOT circuit.

First, when the clock signal CLX is at the H level, for the odd numbered stage of the latch circuit 1450, the clocked inverter 1451 inverts a logic level of the input signal from the left end and supplies the logic level to the input stage of the clocked inverter 1453, and the clocked inverter 1453 re-inverts the logical level of the signal supplied to the input stage to supply it to input stage of the clocked inverter 1452 along with the output signal from the latch circuit 1450. Here, when the clock signal CLX is at the H level, the output of the clocked inverter 1452 for the odd numbered stage becomes a high impedance state. Therefore, when the clock signal CLX is at the H level, the output of the clocked inverter 1453 or the output signal of the odd numbered stage is designated based only on the output level of the clocked inverter 1451. Thus, in the R direction transmission, when the clock signal CLX is at the H level (the clock signal CLXinv is at the L level), the signal Fm output from the odd numbered stage of the latch circuit 1450 is a noninverted signal obtained by repeating the logic inversion of the input signal at the left end twice.

Next, when the clock signal CLX is at the L level and the clock signal CLXinv is at the H level, for the odd numbered stage of the latch circuit 1450, the clocked inverter 1452 inverts the logic level of the output signal by the clock inverter 1453 and feeds it back to the clocked inverter 1453. In addition, for a period when the clock signal CLXinv is at the H level, the output of the clocked inverter 1451 for the odd numbered stage is high impedance. Therefore, in the R direction transmission, when the clock signal CLX is at the L level (clock signal CLXinv is at the H level), the signal Fm output from the odd numbered mth stage of the latch circuit 1450 is a latched one output from the clocked inverter 1453 immediately before the clock signal CLX is at the L level.

For the even numbered stage of the latch circuit 1450, it should be noted that the supply relation between the clocked inverters 1451 and 1452 and the clock signals CLX and CLXinv is opposite the odd numbered one. Thus, in the R direction transmission, when the clock signal CLX is at the L level, a signal F(m+1) output from the even numbered (m+1)th stage of the latch circuit 1450 becomes a positive signal twice logically inverted from the input signal of the left end, or the signal latched by one stage before the odd numbered mth stage of the latch circuit 1450.

In addition, in the R direction transmission, the signal F(m+1) output when the clock signal CLX is at the H level is a signal obtained by latching the output from the clocked inverter 1453 immediately before the clock signal CLX is at the H level.

Therefore, in the R direction transmission, the signal F(m+1) output from the even numbered (m+1)th stage of the latch circuit 1450 is a half-period-delayed one of the clock signal CLX (clock signal CLXinv) compared to the signal Fm output from the previous stage, or the odd numbered mth stage of the latch circuit 1450.

The shift register 140 has an arrangement in which these odd numbered stages and even numbered stages of the latch circuit 1450 are alternately connected. Thus, in the R direction transmission, when the transmission start pulse DX is supplied to the left 1st stage of the latch circuit 1450 as an input, the signals F1, F2, F3, ... output from the left 1st stage, left 2nd stage, left 3rd stage, ... will be as shown in Fig. 5. In other words, the first signal F1 is a signal obtained by normally outputting the transmission start pulse DX when the clock signal CLX is at the H level, and is a signal obtained by latching the immediately previous normal output when the clock signal CLX is at the L level. The second signal F2 is a normal signal of a signal latched by the left 1st stage of the latch circuit when the clock signal CLX is at the L level, and is a signal obtained by latching the immediately previous normal output when the clock signal CLX is at the H level, and the following signals are repeated in the same manner. Therefore, the signals F1, F2, F3, ..., and F130 are shifted one after another by a half period of the clock signal CLX (clock signal CLXinv).

In addition, in the L direction transmission, the output of the clocked inverter 1453 is a high impedance throughout all stages, so that it is electrically negligible, while the clocked inverter 1454 is a simple NOT circuit. For this reason, at the odd numbered (m+2)th stage of the latch circuit 1450, when the clock signal CLX is at the L level, the clocked inverter 1452 inverts the logic level of the signal input from the right end to supply it to the input stage of the clocked inverter 1454, and the clocked inverter 1454 re-inverts the logic level of the signal supplied to the input stage to supply it to the input stage of the clocked inverter 1451, where the output is a high impedance, as well as to outputting it as a signal F(m+1). Therefore, in the L direction transmission, the signal F(m+1) output when the clock CLK is at the L level becomes a normal signal obtained by repeating the logical inversion of the input signal at the right end twice.

For the odd numbered (m+2)th stage of the latch circuit 1450, when the clock signal CLX is at the H level, the clocked inverter 1451 inverts the logic level of the signal output by the clock inverter 1454 to feed it back to the given clocked inverter 1454. Therefore, in the L direction transmission, the signal F(m+1) output when the clock signal CLX is at the H level is a latched one output from the odd numbered (m+2)th stage of the clocked inverter 1454 immediately before the clock signal CLX is at the H level.

Moreover, in the L direction transmission, when the clock signal CLX is at the H level, the signal Fm output from the even numbered (m+1)th stage of the latch circuit 1450 is a noninverted signal obtained by repeating the logical inversion of the input signal at the right end twice, that is, a signal latched by the odd numbered (m+2)th stage of the latch circuit 1450.

Next, in the L direction transmission, the signal Fm output when the clock signal CLX is at the L level is a latched one output from the clocked inverter 1454 of the even numbered (m+1)th stage immediately before the clock signal CLX is at the L level.

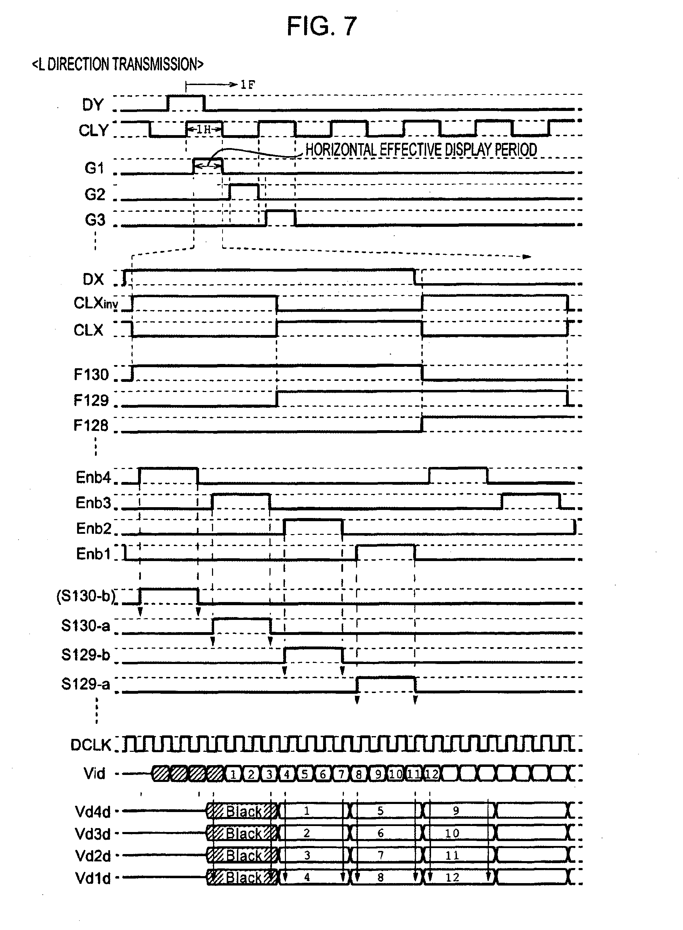

Therefore, in the L direction transmission, when the transmission start pulse DX is supplied to the right 1st stage of the latch circuit 1450 as an input, the signals F130, F129, F128 ... output from the right 1st stage, right 2nd stage, right 3rd stage, ... of the latch circuit 1450 are as shown Fig. 7. In other words, the first signal F130 is a signal obtained normally outputting the transmission start pulse DX when the clock signal CLX is at the L level, and is a signal obtained by latching the immediately previous noninverted output when the clock signal CLX is at the H level. The second signal F129 is a signal latched by the right 1st stage of the latch circuit when the clock signal CLX is at the H level, and is a signal obtained by latching the immediately previous noninverted output when the clock signal CLX is at the L level, and the following signals are repeated in the same manner. Therefore, the signals F130, F129, F128, ..., and F1 are sequentially shifted by a half period of the clock signal CLX (clock signal CLXinv).

In addition, in Fig. 4, to aid understanding of the description, a complementary arrangement is omitted. Specifically, the clocked inverters 1451, 1452, 1453, and 1454 are well known, each of which comprises two complementary P-channel TFTs and two N-channel TFTs connected in series in a range from the high level voltage Vdd to the low level voltage Vss of the power supply.

Therefore, for example, the clock signal CLX shown in Fig. 4, as well as the clock signal CLXinv (not shown), is supplied to the odd numbered stage of the clocked inverter 1451, for example. Similarly, for example, the signal Dir-R shown in Fig. 4, as well as the signal Dir-L (not shown), is supplied to the clocked inverter 1453.

Referring back to Fig. 2, each signal path of the signals F1, F2, ..., and F130 output from the shift register 1450 is branched into two, or the right and left directions in Fig. 2, respectively, and in principle, an operation circuit comprising a NAND circuit 142, a NOT circuit 143, a NAND circuit 144, and NOT circuits 145 and 146 is arranged after each branched path. However, for a left-branched path of two branches of the signal F1 path, and a right-branched path of the two branches of the signal F130 path, as an exception, only the NAND circuit 142 is provided.

Here, among supply paths of the signal Fm, where m is an odd number, i.e., the signal output from the odd numbered stage of the latch circuit 1450 in the R direction transmission (signal output from the even numbered stage of the latch circuit 1450 in the L direction transmission), the NAND circuit 142 corresponding to the left-branched path of Fig. 2 outputs a NAND signal of the given signal Fm and the enable signal Enb1, while the NAND circuit 142 corresponding to the right-branched path outputs a NAND signal of the given signal Fm and the enable signal Enb2.

In addition, among the signal Fm, where (m+1) is an even number, i.e., the signal output from the even numbered stage of the latch circuit 1450 in the R direction transmission (signal output from the odd numbered stage of the latch circuit 1450 in the L direction transmission), the NAND circuit 142 corresponding to the left-branched path of Fig. 2 outputs a NAND signal of the given signal F(m+1) and the enable signal Enb3, while the NAND circuit 142 corresponding to the right-branched path outputs a NAND signal of the given signal F(m+1) and the enable signal Enb4.

Here, for the enable signals Enb1 to Enb4, the periods of the pulse widths for the H level are substantially the same, as shown in Fig. 5, and are not overlapped with each other. Further, phases thereof are shifted by 90 degrees with respect to each other. Furthermore, in the R direction transmission, pulses of the enable signals Enb1 and Enb2 are output one after another when the clock signal CLX is at the H level, and pulses of the enable signals Enb3 and Enb4 are output in order when the clock signal CLKinv is at the H level.

The NAND circuit 144 outputs a NAND operated signal between a signal NAND operated by the NAND circuit 142 and a signal inverted from the signal NRG by the NOT circuit 143. The NOR operated signal by the NOR circuit 144 is output as a sampling signal via logical inversion an even number of times (twice in Fig. 2) by the NOT circuits 145 and 146.

Here, among the output paths of the signals F1, F2, F3, ..., and F130, the sampling signals output through the left-branched path are referred to as S1-a, S2-a, S3-a, ..., and S130-a, and the sampling signals output through the right-branched path are referred to as S1-b, S2-b, S3-b, ..., and S130-b.

In addition, for the left-branched path of the two branches of the signal F1 and for the right-branched path of the two branches of the signal F130, only the NAND circuit 142 is arranged. Therefore, in fact, although the sampling signals S1-a and S130-b have nothing to output, the output signal of the given NAND circuit 142 is regarded as a virtual signal when inverted by the NOT circuit, as shown in dotted lines.

The sampling switch 148 is, for example, an N-channel TFT, and is provided to every data line 114. The sampling switch 148 samples the respective signals Vid1 to Vid4 of four channels supplied through four image signal lines 171 into the data lines 114.

Specifically, for the sampling switch 148 in which a drain is connected to one end of the jth data line 114 counting from the left side of Fig. 2, when the remainder after dividing j by 4 is '1', the source is connected to the image signal line 171 to which the signal Vid1 is supplied. Similarly, for the sampling 148 in which a drain is connected to the data line 114 when the remainder after dividing j by 4 is '2', '3', and '0', respectively, the source is connected to the image signal line 171 to which the signal Vid2 to Vid4 is supplied. For example, the source of the sampling switching in which a drain is connected to the eleventh data line 114 counting from the left side of Fig. 2 is connected to the image signal line 171 to which the signal Vid3 is supplied since the remainder after dividing '11' by 4 is '3'.

Moreover, the gate of the four sampling switches 148 in which a drain is connected to the data line 114 where the quotient after dividing (j+3) by 8 is 'i' and the remainder is '0' to '3' is commonly supplied to each sampling signal S(i+1)-a, and the gate of the four sampling switches 148 in which a drain is connected to the data line 114 where the remainder is '4' to '7' is commonly supplied to each sampling signal S(i+1)-b.

For example, the fifth to eighth data lines 114 have (j+3) of '8' to '13', and the quotient after dividing this number by 8 is '1', and the remainder is '0' to '3', respectively, so that the gate of the sampling switch 148 corresponding to the data line 114 is commonly supplied with the sampling signal S2-a. In addition, for example, the 1025th to 1028th data lines 114 have (j+3) of '1028' to '1031', and the quotient that divides this number into 8 is '128', and the remainder is '4' to '7', respectively, so that the gate of the sampling switch 148 corresponding to the data line 114 is commonly supplied with the sampling signal S129-b.

In addition, according to an embodiment of the present invention, four data lines 114 having a relation such that the same sampling signal is supplied to the gate of the corresponding sampling switch 148 are regarded as a block.

Next, the operation of the electro-optical device according to the embodiment will be illustrated in the context of the R direction transmission. Figs. 5 and 6 are timing charts for illustrating the operation of an electro-optical device in the R direction transmission.

First, for a first horizontal scanning period 1F, a transmission start pulse DY is supplied to a scanning line driving circuit 130. With this, the scanning signals G1, G2, G3, ..., and G768 are at the H level exclusively only for the horizontal effective display period, as shown in Fig. 5.

Here, with respect to the horizontal effective display period in which the scanning signal G1 is at the H level, for a retrace period prior to the given horizontal effective display period, the signal NRG is at the H level for a precharge period isolated from the front and back end of the retrace period, as shown in Fig. 6. For the horizontal effective display period, in the case of the positive polarity writing, the precharge voltage generation circuit 310 makes a precharge voltage signal Vpre a voltage Vg(+) corresponding to the positive polarity writing.

When the signal NRG is at the H level, a selector 350 (ref. Fig. 1) selects the precharge voltage signal Vpre, so that four image signal lines 171 are a voltage Vg(+) corresponding to the positive polarity writing for the immediately following the horizontal effective display period.

In addition, when the signal NRG is at the H level, irrespective of the level NAND operated by the NAND circuit 142, the NAND signal output by the NAND circuit 144 is forced to be the H level, so that all sampling switches 148 are turned on. Therefore, when the signal NRG is at the H level, the voltage signal Vpre of the image signal line 171 is sampled so that all of the data lines 114 are precharged into Vg(+) as the pre-established positive polarity writing.

In addition, when the precharge period ends and the signal NRG is at the L level, the NAND circuit 144 acts as a NOT circuit for inverting a logic level of the NAND signal output by the NAND circuit 142.

When the retrace period ends, the transmission start pulse DX is shifted by each latch circuit 1450 of the shift register 140, as shown in Fig. 5, and is output as the signals F1, F2, F3, ... during a horizontal effective display period.

The pulse width of the left-branched signal of the odd numbered m signal Fm is reduced by performing a NAND operation of the left-branched signal and the enable signal Enb1 by the NAND circuit 142, and the NAND signal of the left-branched signal and the enable signal Enb1 is output as the sampling signal Sm-a via the NAND circuit 144 and the NOT circuits 145 and 146. In addition, the pulse width of the right-branched signal of the odd numbered m signal Fm is reduced by performing a NAND operation of the right-branched signal and the enable signal Enb2 by the NAND circuit 142, and the NAND signal of the right-branched signal and the enable signal Enb2 is output as the sampling signal Sm-b via the NAND circuit 144 and the NOT circuits 145 and 146.

Furthermore, the pulse width of the left-branched signal of the even numbered (m+1) signal F(m+1) is reduced by performing a NAND operation of the left-branched signal and the enable signal Enb3 by the NAND circuit 142, and the NAND signal of the left-branched signal and the enable signal Enb3 is output as the sampling signal S(m+1)-a via other circuits. Similarly, the pulse width of the right-branched signal of the even numbered (m+1) signal F(m+1) is reduced by performing a NAND operation of the right-branched signal and the enable signal Enb4 by the NAND circuit 142, and the NAND signal of the right-branched signal and the enable signal Enb4 is output as the sampling signal S(m+1)-b via other circuits.

Here, positive pulse widths (a period for the H level) of the enable signals Enb1 and Enb2 are included in the period where the clock signal CLX is at the H level, and positive pulse widths (a period for the H level) of the enable signals Enb3 and Enb4 are included in the period where the clock signal CLX is at the L level (clock signal CLXinv is at the H level), and at the same time, outputs such that the positive pulse widths are overlapped with each other. Thus, the sampling signals S1-b, S2-a, S2-b, ... are output not to be overlapped, as shown in Fig. 5. In addition, the sampling signals S1-a and S130-b are virtual signals as described above.

Further, first, the image data Vid supplied in synchronization with the horizontal period are distributed into four channels by the S/P conversion circuit 302, and extended by four times along the time axis, and secondly, are converted into each analog signal by the D/A converters 304, and output normally using the voltage Vc as reference corresponding to the positive polarity writing. For this reason, the noninversed image signals Vd1 to Vd4 are at the H level voltage compared to the voltage Vc as the pixels are used as black ones.

In addition, for the horizontal effective display period, a signal NRG is at the L level. Thus, a selector 350 selects the applied image signals Vd1 to Vd4, so that the signals Vid1 to Vid4 supplied to four image signal lines 171 become image signals Vd1 to Vd4 by the amplification/inversion circuit 306.

In addition, in Fig. 6, among the signals supplied to four image signal lines 171, the voltage variation of the signal Vid1 corresponding to the channel ch1 is shown. For a retrace period, when the image signals Vd1 to Vd4 are black-like voltages Vb(+) or Vb(-) corresponding to the polarity, the signal Vid1 supplied to the image signal line 171 is some portion of the black-like voltage, and when the signal NRG is at the H level, the precharge voltage signal Vpre is provided so that the signal is gray-like voltages Vg(+) or Vg(-) corresponding to the immediately following writing polarity.

Further, for the horizontal effective display period where the scanning signal G1 is at the H level, the first sampling signal S1-a is at the H level. However, this signal is not supplied to the sampling switch 148, so that the sampling signal S1-a is not concerned in the display operation.

Next, when the sampling signal S1-b is at the H level, for each of the first to fourth data lines 114 counting from the left side of Fig. 2, each image signal Vd1 to Vd4 is sampled. In addition, the sampled image signals Vd1 to Vd4 are respectively applied to the pixel electrode 118 of the pixel 110 corresponding to the intersection between the first scanning line 112 and the first to fourth data lines 114 counting downwardly in Fig. 2.

However, the first to fourth data lines 114 belong to the dummy pixel region, so that the sampled image signals are black-like voltage Vb(+) in response to the positive polarity writing. For this reason, pixels in the range from the 1st row, 1st column to the 1st row, 4th column perform a black display.

Next, when the sampling signal S2-a is at the H level, at this time, for each of the fifth to eighth data lines 114, each image signal Vd1 to Vd4 is sampled. In addition, the sampled image signals are respectively applied to the pixel electrodes 118 of the pixels 110 corresponding to the intersections between the first-row scanning line 112 and the fifth to eighth data lines 114.

These fifth to eighth data lines 114 belong to the effective pixel region, and the sampled image signals are gray-scale levels indicated by the image data Vid, corresponding to the positive polarity writing. For this reason, the pixels in the range from the 1st row, 5th column to the 1st row, 8th column are in gray levels indicated by the image data Vid.

Therefore, according to an embodiment of the present invention, the effective pixels that contribute to display start from the fifth one.

Further, when the sampling signal S2-b is at the H level, at this time, for each of the ninth to twelfth data lines 114, each image signal Vd1 to Vd4 is sampled. In addition, the sampled image signals Vd1 to Vd4 are respectively applied to the pixel electrodes 118 of the pixels 110 corresponding to the intersections between the first-row scanning line 112 and the ninth to twelfth data lines 114. Thus, the pixels in the range from the 1st row, 9th column to the 1st row, 12th column are in gray levels indicated by the image data Vid.

Hereinafter, the same writing is repeated until the sampling signals S129-b, S130-a, and S130-b are at the H level, one after another, so that all writing for the first-row pixels is completed.

However, when the sampling signal S130-a is at the H level, the 1029th to 1032nd data lines belong to the dummy pixel region, so that the sampled image signals are at the black-like voltage Vb(+), For this reason, pixels in the range from the 1st row, 1029th column to the 1st row, 1032nd column are blackened. In addition, in the R direction transmission, the sampling signal S130-b is at the H level for the last transmission in one horizontal effective display period, but this signal is not supplied to the sampling switch 148. Therefore, the sampling signal S130-b is not concerned in the display operation. In other words, according to the present embodiment, the pixels that contribute to display end at the 1028th pixel.

Therefore, according to an embodiment of the present invention, the range of effective pixels contributing to display is from the 5th to 1028th columns, or 1024 columns.

When writing to all first-row pixels is completed, the scanning signal G1 is at the L level. When the scanning signal G1 is at the L level, the TFT 116 connected to the first-row scanning line 112 turns off, but due to the storage capacitor 109 and the capacitance of the liquid crystal layer itself, the pixel electrode 118 is maintained at the voltage written at the 'on' time, so that the gray-scale level corresponding to the given retention voltage is retained.

Next, during the retrace periods immediately before the scanning signal G2 is at the H level, for a precharge period where the signal NRG becomes to the H level, four image signal lines 171 are supplied with the precharge voltage signal Vpre by the precharge voltage generation circuit 310, as described above. However, for the horizontal effective display period where the scanning signal G2 is at the H level, negative polarity writing is performed for the polarity inversion of every scanning line. Thus, all data lines 114 are precharged to the voltage Vg(-) in response to the negative polarity writing.

Other operations are the same as that for the period where the scanning signal is at the H level, and as the sampling signals S1-a, S1-b, S2-a, S2-b, ..., and S130-a, S130-b are at the H level one after another, among the second-row pixels, pixels in the range from the 2nd row, 1st column to the 2nd row, 4th column are blackened, and writing for performing the effective display on the 2nd row, 5th column to the 2nd row, 1028th column is performed, and pixels in the range from the 2nd row, 1029th column to the 2nd row, 1032nd column are blackened.

Further, the amplification/inversion circuit 306 inverts the analog signal by the D/A converters 304 as a basis of the voltage Vc in response to each negative polarity writing, so that the signals Vid1 to Vid4 (Vd1 to Vd4) correspond to a voltage lower than the voltage Vc as the pixels are blackened (see Fig. 6).

Hereinafter, similarly, the scanning signals G3, G4, ..., and G768 are at the H level and writing is performed on the pixels in the 3rd row, 4th row, ..., 768th row. With this, positive polarity writing for the pixels in the odd numbered rows and negative polarity writing for the pixels in the even numbered rows are performed, and for this one vertical scanning period, writing into the 1st to 768th rows of pixels is completed.

Further, for the next one vertical scanning period (1F), the same writing is performed, but this time, the writing polarity for each row of pixels can be interchanged. In other words, for the next one vertical scanning period, negative polarity writing for the pixels in the odd numbered rows and positive polarity writing for the pixels in the even numbered rows are performed. In this way, since the writing polarity into the pixels for each horizontal scanning period can be interchanged, applying a DC component to the liquid crystal is not required so that degradation of the liquid crystal can be prevented. In addition, with the exchanged writing polarity, the precharge voltage signal Vpre is also polarity-inverted.

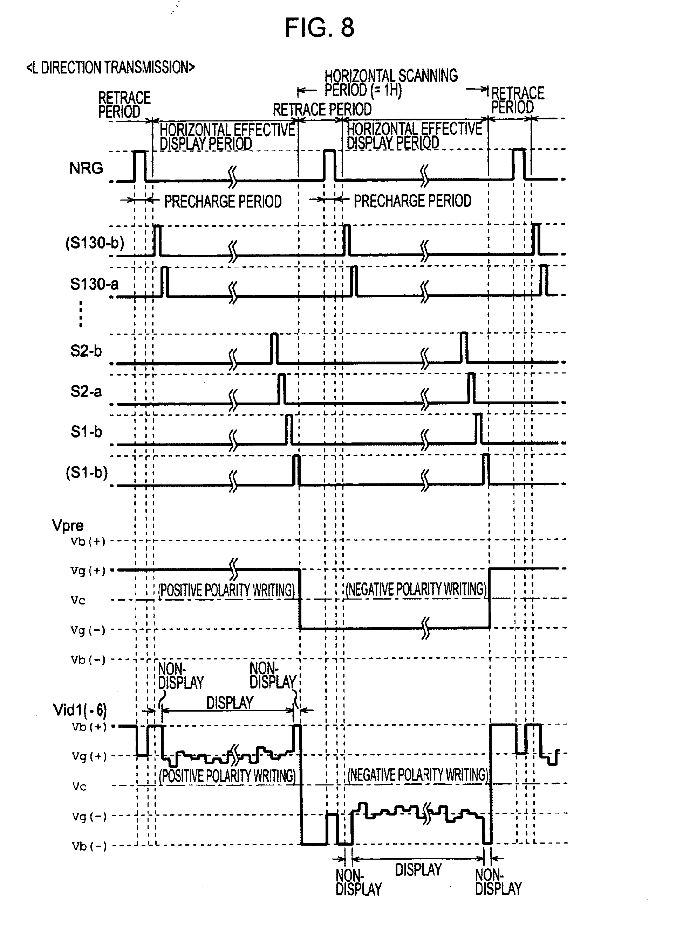

In addition, operation of L direction transmission is shown in Figs. 7 and 8, and the difference compared to the R direction transmission is that the sampling signals S130-b, S130-a, ..., and S2-b, S2-a, S1-b, and S1-a are at the H level one after another, and the distribution sequence of the image signals Vd1 to Vd4 to the image signal line 171 is reversed since the connection relationship between the sampling switch 148 and the image signals line 171 are fixed in the block. In addition, a phase relation between the clock signals CLX and CLXinv and the enable signals Enb1 to Enb4 is also reversed, but this may be coped by interchanging the signal supply path.

In the present embodiment, for a path in which the output path of the signal F1 is branched in the left direction, and a path in which the output path of the signal F130 is branched in the right direction, only the NAND circuit 142 is provided, and sampling switches 148 are omitted after the NAND circuit and the data line 114. In addition, the range of effective pixels contributing to display is restricted to the 5th column to 1028th column, or 1024 columns. Here, the reason for and the effect of the restriction will now be described.

As described above, in the R direction transmission, the first half of the positive pulse (H level) in the signal F1 output at first from the shift register 140 is obtained by normally outputting the transmission start pulse DX when the clock signal CLX is at the H level, while the former part of the positive pulses in the signals F2, F3, ..., and F130 are respectively obtained by normally outputting the signals latched by the latch circuits at the previous stages. In other words, in the R direction transmission, since there is no latch circuit at the stage before the latch circuit outputting the signal F1 to be positive pulse, the signal F1 is output with a different waveform under the different condition from those of other signals F2, F3, ..., and F130.

Here, the signal F1 is branched into two paths, the left and right paths, and the branched signals of the signal F1 are supplied to the NAND circuits 142, respectively, to be the sampling signals S1-a and S1-b. When the image signals are sampled on the data lines 114 by the sampling signals S1-a and S1-b, 8 data lines 114 in which the image signals are sampled by the respective sampling signals S1-a and S1-b are provided in the present embodiment. The signal F1 as the original signals of the sampling signals S1-a and S1-b is different from other signals F2, F3, ..., and F130, so that the image signals are sampled on the 8 data lines 114 described above in states different from those of the other data lines 114, and with this result, a large difference in display quality occurs.

As a method to remove the difference in the display quality, it will be appreciated that the pixels corresponding to the 8 data lines are designated to be the dummy pixel region that does not contribute to display. However, the present inventors came to the conclusion that when this method is used to attempt high definition display, a non-display region, which is wasteful, becomes excessively large. This is because the present embodiment uses an arrangement such that the image data is expanded onto 4 channels (4 dimensions) and the number of data lines on which the image signals are sampled at the same time is '4', but when an arrangement is provided in which the video data is expanded onto 32 channels (32 dimensions) and the number of data lines on which the image signals are sampled at the same time is '32', the pixel region corresponding to 64 data lines, twice compared to the above case, becomes at least the dummy pixel region. In addition, with a large non-display region, which is wasteful, the electro-optical panel 100 becomes correspondingly larger, so that the number into which one mother substrate can be cut is reduced, leading to high manufacturing costs.

In addition, due to capacitive coupling between the image signal line 171 and the counter electrode 108, capacitive coupling between the data line 114 and the counter electrode 108, and the resistance of the counter electrode 108, the voltage of the counter electrode 108 to be kept at the voltage LCcom may vary according to the voltage variation of the image signal line 171.

In the present embodiment, in the case of the R direction transmission for one horizontal scanning period, the image signals are sampled on the data line 114 in the sequence of the 1st to 4th, the 5th to 8th, and the 9th to 12th lines, but for example, due to the voltage variation of the image signal line 171 when the 1st to 4th data lines 114 are selected or the voltage variation of the data line 114 accompanying the sampling of the image signal, the voltage of the counter electrode 108 may be changed. In the state in which the voltage variation is not converged, when the image signals are sampled on the next lines, that is, 5th to 8th column data lines 114, the counter electrode 108 is not at the voltage LCcom even if the image signal is properly applied to the pixel electrodes 118 of the corresponding pixels. Therefore, the voltage retained in the liquid crystal capacitor does not become the predetermined value. This is also applicable to each group after a group of the 9th to 12th data lines, where the image signals are simultaneously sampled.

With respect to this, for the 1st to 4th data lines 114, there are no data lines 114 in which the image signals are sampled earlier, so that these are not affected by a voltage variation of the counter electrode 108. Therefore, there may be a display difference between pixels corresponding to the 1st to 4th data lines 114 and pixels corresponding to the 5th and the subsequent data lines 114 affected by the voltage variation.

First, according to the present embodiment, the sampling signal S1-a based on the left-branched signal of the signal F1 is not used. With this, four sampling switches 148 and four data lines can be omitted, and the ineffective region is accordingly reduced. Next, according to the present invention, an arrangement in which the sampling signal S1-b based on the right-branched signal of the signal F1 is used to sample the image signals on the 1st to 4th data lines 114 by the sampling switch 148 is provided. However, the pixels corresponding to the 1st to 4th data lines 114 are designated to be the dummy pixel region which does not contribute to display. With this, a display difference does not occur for pixels corresponding to the 5th and subsequent data lines 114 that receive a voltage variation of the counter electrode 108.

Therefore, according to the present embodiment, the sampling switches 148 turned on and off based on the sampling signal S1-a for branching the signal F1 to the left side, and the data lines 114 are omitted, and accordingly, the pixel region corresponding to the 1st to 4th data lines 114 in which the image signals are sampled based on the sampling signal S1-b branched to the right side is used as the dummy pixel region. Therefore, in the R direction transmission, a difference between the signal F1 output at first for one horizontal scanning period, and the other signals F2, ..., and F130, and degradation of display quality due to the voltage variation of the counter electrode can be suppressed, and the non-display dummy pixel region can be reduced.

Further, in the L direction transmission, the first half of the positive pulse (H level) in the signal F130 output at first from the shift register 140 is obtained by normally outputting the transmission start pulse DX as it is for a period when the clock signal CLX is at the L level, while the former part of the positive pulses in the signals F129, F128, ..., and F1 are respectively obtained by normally outputting the signals latched by the latch circuit at the previous stage. For this reason, the signal F130 is output with a different waveform under different the condition waveform from those of other signals F129, F128, ..., and F1.

In addition, regarding a voltage variation of the counter electrode in the L direction transmission, there may be a display difference between pixels corresponding to the 1032nd to 1029th data lines 114 and pixels corresponding to the 1028th to 1st data lines 114 affected by the voltage variation of the counter electrode.

With this, according to the present embodiment, the sampling switches 148 turned on and off based on the sampling signal S130-b as the right-branched signal of the signal F130, and the data lines 114 are omitted, and accordingly, the pixel region corresponding to the 1032nd to 1029th data lines 114 in which the image signals are sampled based on the sampling signal S130-a as the left-branched signal of the signal F130 is used as the dummy pixel region. Therefore, in the L direction transmission, a difference between the signal F130 output at first for one horizontal scanning period and other signals F129, ..., and F1, and degradation of display quality due to the voltage variation of the counter electrode can be suppressed, and the ineffective dummy pixel region can be reduced.

However, since the degradation of the display quality results from signals output at first from the shift register 140 for one horizontal scanning period and a voltage variation of the counter electrode, in the case of the R direction transmission, it will be appreciated that only the region corresponding to the 1st to 4th data lines is designated to be the dummy pixel region, and so the pixel region of the 1029th to 1032nd data lines at the opposite side is not necessarily used as the dummy pixel region.

Similarly, in the L direction transmission, it will be appreciated that only the region corresponding to the 1032nd to 1029th data lines is designated to be the dummy pixel region, and so the pixel region of the 4th to 1st data lines is not necessarily used as the dummy pixel region.

However, as described below, with a three-panel type projector corresponding to RGB, when images corresponding to the respective colors are formed with three electro-optical panels, it is necessary to form a normal image for one color and a left-right inverted image for another color and to combine and to project them.

In this case, when dedicated electro-optical panels are provided for the normal image and the left-right inverted image, high manufacturing costs are required. Thus, it is advantageous to arrange one electro-optical panel available for both the normal image and the left-right inverted image.

However, with the arrangement described above, in case of the R direction transmission for forming the normal image, only the region corresponding to the 1st to 4th data lines is used as the dummy pixel region, while in case of the L direction transmission for forming the left-right inverted image, only the region corresponding to the 1032nd to 1029th data lines is used as the dummy pixel region, which is inappropriate since the center of the normal image and the center of the left-right inverted image are not matched for the panel (entire pixel region).

To overcome this problem, according to the present embodiment, in the R direction transmission, the pixel region of the 1029th to 1032nd data lines is used as the dummy pixel region, and in the L direction transmission, the pixel region of the 4th to 1st data lines is used as the dummy pixel region to obtain left and right symmetry of the image formed in the panel, in the L direction transmission.

Therefore, when left and right symmetry is not necessary, since it is not necessary to use the pixel region of the 1029th to 1032nd data lines as the dummy pixel region in the R direction transmission, the pixel region may be used as the effective pixel region. Similarly, in the L direction transmission, it is possible to use the pixel region of the 4th to 1st data lines as the effective pixel region to contribute to the display.

In addition, in the present embodiment, according to the XGA (extended Graphics Array) format, the number of effective pixels in the horizontal direction is '1024', the number of data lines 114 (the number of phase expansion) for simultaneously sampling the image signals by the same sampling signal is '4' which divides '1024'. Therefore, in this format, the number of phase expansion may be 8, 16, 32, and 48, in addition to 4. With more phase expansion, a reduction in the number of stages in the shift register 140 and frequency degradation of the clock signal CLX (CLXinv) may occur, and the dummy pixel region is gradually increased.

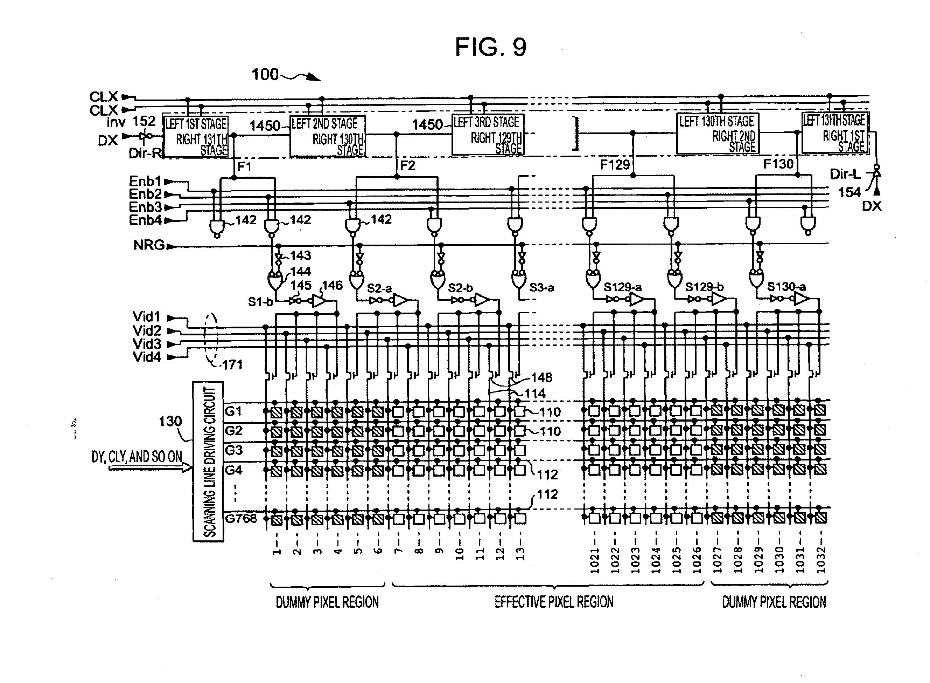

In addition, as shown in Fig. 9, the 5th and 6th blocks, or the left end of the effective image region, and the 1027th and 1028th blocks, or the right end of the effective image region, may be used as the dummy pixel region.

This is because, in the pixel region corresponding to the 1st to 4th and 1029th to 1032nd data lines 114, difference in individual display quality may easily occur, but these data lines 114 and the 5th, 6th, 1027th and 1028th data lines 114 are spatially adjacent, as described above, and so these are easily affected by capacitive coupling. Here, the pixel region corresponding to the 5th and 6th data lines 114 is used as a buffer against the 1st to 4th data lines in which a difference in display quality with respect to the effective pixel region readily occurs, and the pixel region corresponding to the 1027th and 1028th data lines 114 is used as a buffer against the 1029th to 1032nd data lines in which a difference in display quality with respect to the effective pixel region readily occurs, so that the influence of the effective pixel region is reduced as much as possible.

Further, the number of effective pixels in the horizontal direction is '1022' in Fig. 9. Meanwhile, the number of effective pixels may be the number of pixels specified in a format, for example, '1024'. In that case, it is possible to divide the effective pixel region to '172' blocks by using '6' as the number of phase expansion. Further, it is possible to use the pixel regions corresponding to 4 data lines 114 at both ends of the left and right sides as a dummy pixel region.

With the dummy pixel region acting as the buffer described above, there is a lesser need to set the number of phase expansion to a number having a remainder of '0' when divided by the number of effective pixels in the horizontal direction.

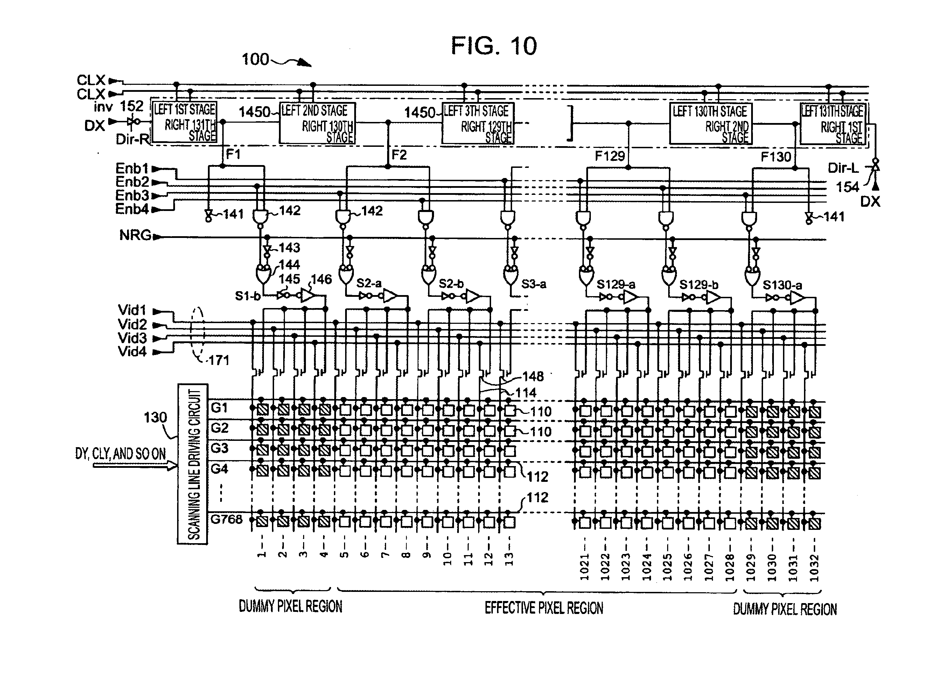

Further, according to the present invention, while the path in which the output path of the signal F1 is branched to the left side and the path in which the output path of the signal F130 is branched to the right side, each have the NAND circuit 142, as in the other branched path, this output signal is not supplied anywhere, so that it may be replaced with the simple NOT circuit 141, as shown in Fig. 10.

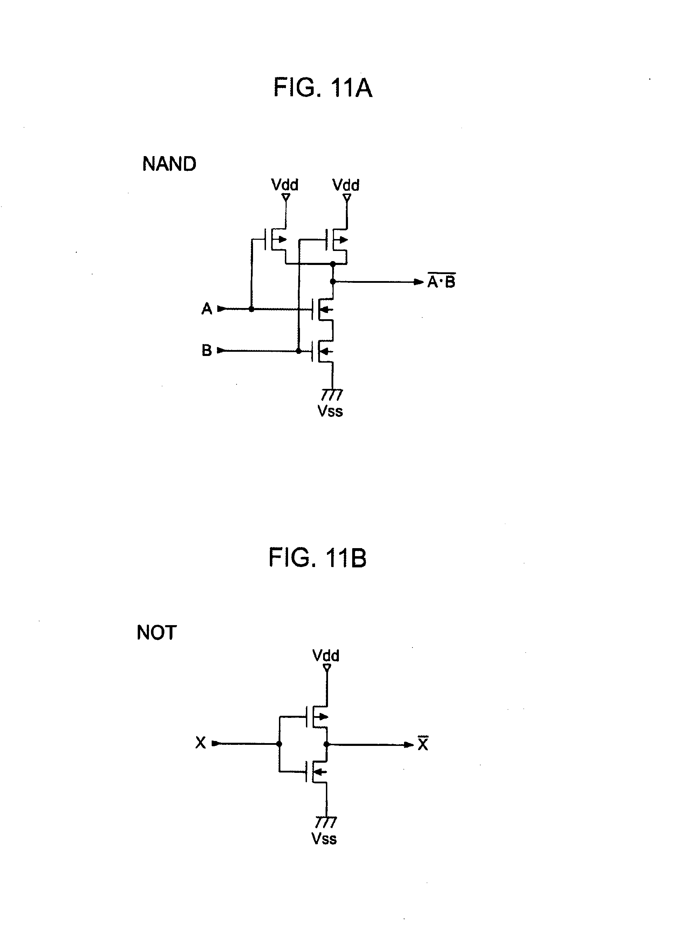

With the complementary NAND circuit 142, an arrangement shown in Fig. 11A is provided, and with the complementary NOT circuit 141, an arrangement shown in Fig. 11B is provided. Therefore, when seen from the branch path of the signals F1 and F130, a gate of the P-channel TFT and a gate of the N-channel TFT are commonly supplied in parallel, so that a parasitic capacitor in the output path of the signals F1 and F130 is substantially the same as the parasitic capacitor in the output path of other signals F2, F3, ..., F129, and nonuniformity caused by a condition other than the latch condition is prevented.

In addition, while the present embodiment described above has described blackening the dummy pixel region that it does not contribute to display, examples of the non-display can be various types other than this.

For example, first, the pixel of the dummy pixel region need not be the minimum gray-scale level: it may be a color close to this, or it may be gray or black, or the maximum brightness.

Secondly, only the data line 114 is used as the dummy pixel region, and the pixel 110 may not be partially or fully formed. In addition, the data line 114 may be omitted. However, when a voltage variation of the counter electrode dominates over a difference between the signal output from the first stage for the shift register 140 and the signal output from the other stage, as a factor causing degradation of display quality, it is desirable that the pixel 110 in the dummy pixel region and the pixel 110 in the effective pixel region be the same since there is a need to prepare a certain amount of the capacitive coupling at the dummy pixel region and the effective pixel region.

Thirdly, whether or not the pixel 110 is formed, a light blocking layer (or liquid crystal) may be arranged corresponding to the portion of the dummy pixel region.

At any rate, preferably, pixels of the dummy pixel region may be discriminated from the pixels of the effective display region.

Further, while in the embodiments described above the processing circuit 300 processes digital image signals Vid, it may also process analog image signals. In addition, while the processing circuit 300 has an arrangement of S/P conversion followed by analog conversion, it may be an arrangement in which the S/P conversion expansion is followed by an analog conversion provided that the final result is the same analog signal.

Moreover, while the embodiments described above have been described in the context that low voltage effective values of the counter electrode 108 and the pixel electrode 118 have been described as a normally white mode for performing white display, it may be called as a normally black mode for performing black display.

While the embodiments described above use a TN-type liquid crystal, a bi-stable type liquid crystal having a memory characteristic, such as ferroelectric liquid crystal and a BTN (Bi-stable twisted nematic) liquid crystal, a polymer dispersion type liquid crystal, or a GH type (guest-host) type liquid crystal in which a dye (guest) having anisotropic due to absorption of visible light in a long axis direction and a short axis direction are resolved into a liquid crystal (host) of the constant molecular arrangement and the dye molecules are arranged in parallel with the liquid crystal molecules may be used.

In addition, vertical alignment (homeotropic alignment) may be provided such that the liquid crystal molecules are vertically arranged with respect to both substrates when the voltage is not applied, while the liquid crystal molecules are horizontally arranged with respect to both substrates when the voltage is applied. Parallel (horizontal) alignment (homogeneous alignment) may also be possible such that the liquid crystal molecules are vertically arranged with respect to both substrates when the voltage is applied, while the liquid crystal molecules are horizontally arranged with respect to both substrates when the voltage is not applied. In this way, in the present invention, since various types of liquid crystals can be used and liquid crystal molecules can be arranged by the alignment schemes, the liquid crystal device may be applicable to various electronic apparatuses.

While the liquid crystal device has been described, provided that the present invention has an arrangement such that the video data (video signal) is S/P expanded to be supply via the image signal lines, for example, it can be applied to a device such as an EL (Electronic Luminescence) device, an electron emission device, an electrophoretic device, a digital mirror device, and a plasma display.

### <Electronic Apparatus>

Next, as an example of an electronic apparatus using the electro-optical device according to an embodiment of the present invention, a projector using the electro-optical panel 100 as a light valve will be described.

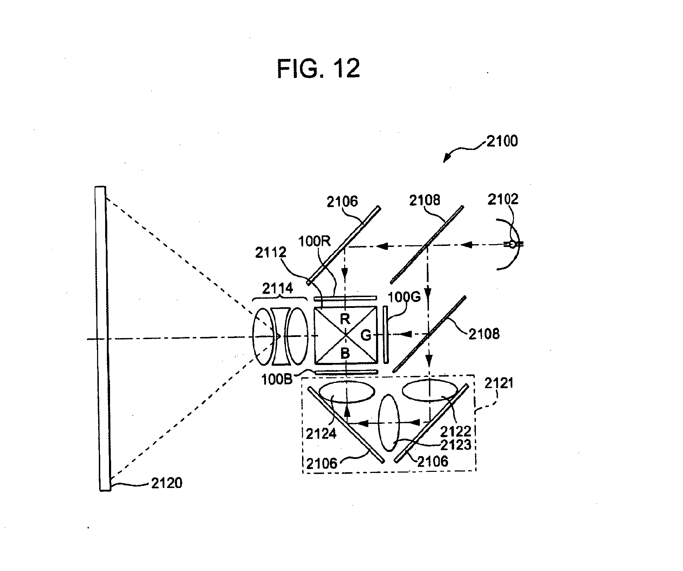

Fig. 12 is a plan view showing an arrangement of the projector. As shown Fig. 12, a lamp unit 2102 having a white light source, such as a halogen lamp, is arranged inside the projector 2100. Projection light emitted from the lamp unit 2102 is divided into the three primary colors R (red), G (green), and B (blue), by three mirrors 2106 and two dichroic mirrors 2108 arranged inside the projector 2100, and then is driven to light valves 100R, 100G, and 100B respectively corresponding to each primary color. In addition, since a B light component has a long optical length compared to R and G light components, a relay lens system comprising an incident lens 2122, a relay lens 2123, and an exit lens 2124 is used to prevent optical loss.

Here, the arrangements of the light valves 100R, 100G, and 100B have the same as that of the electro-optical panel 100 according to the embodiments described above, and they are respectively driven by image signals corresponding to each color, R, G, and B, supplied from a processing circuit (not shown in Fig. 12).

Light demodulated by the light valves 100R, 100G, and 100B, respectively, is incident on a dichroic prism from three directions. Further, in the dichroic prism 2112, the R light component and the B light component are refracted by 90 degrees, while the G light component propagates straight through. Therefore, after each color image is combined, a color image is projected to the screen 2120 through a projector lens 2114.

In addition, in the light valves 100R, 100G, and 100B, since light corresponding to each primary color R, G, and B is incident by the dichroic mirror 2108, a color filter is not required. In addition, transmission images of the light valves 100R and 100B are reflected and then transmitted by the dichroic prism 2112, and the transmission image of the light valve 100G is transmitted as is. Thus, the horizontal scanning directions of the light valves 100R and 100B are in the opposite direction to the horizontal scanning direction by the light valve 100G to display the left-right inverted image.

In addition, as an electronic apparatus, in addition to the example shown in Fig. 12, there can be employed a direct-vision type apparatus such as a mobile telephone, a personal computer, a television, a monitor of a video camera, a car navigation device, a pager, an electronic notebook, a calculator, a word processor, a workstation, a video call device, a POS terminal, a digital still camera, and an apparatus having a touch panel. In addition, it is needless to mention that the electro-optical device according to the present invention can be applied to these various electronic apparatuses.

## Claims

1. An electro-optical device having pixels arranged in a pixel matrix corresponding to intersections of scanning lines and data lines, for producing gray-scale levels in response to image signals supplied on an image signal line (171) when image signals are sampled on the data lines for a period during which each of the plurality of scanning lines is selected, said data lines being formed in blocks composed of a plurality of data lines, the electro-optical device comprising:
a scanning line driving circuit (130) for sequentially selecting the plurality of scanning lines for each respective horizontal scanning period;
a shift register composed of a plurality of stages (1450) that are connected to each other so as to sequentially transmit a pulse signal supplied at the beginning of each horizontal scanning period according to a predetermined clock signal, the stages including a first end-stage and a second end-stage at opposite ends of the shift register;
operation circuits (142-146) for generating a plurality of sampling signals (S1-a to S130-b) by performing logical operations on each of the pulse signals outputted by the stages of the shift register, and predetermined enable signals, such that pulses transmitted by the plurality of sampling signals do not overlap with each other; and
a plurality of sampling switches (148) controlled by said sampling signals, each sampling switch being electrically interposed between a corresponding one of said data lines and the image signal line, for turning on and sampling the image signals supplied to the image signal line onto the data lines, wherein sampling switches corresponding to data lines belonging to the same one of said blocks are turned on and off substantially at the same time by the same sampling signal;
wherein a path for transmitting the pulse signal from one stage to a stage adjacent thereto is provided for each of the stages, each path being further connected to two branches, each branch transmitting the pulse signal, each of said two branches being connected to one of said operation circuits;
wherein said operation circuits are arranged to perform said logical operations on the branched pulse signals and to operate said sampling switches allocated to a respective said block of data lines;
**characterized in that**:
the sampling switches and the data lines are provided in correspondence with one of the two branches corresponding to a path between the first end-stage and a stage adjacent thereto and between the second end-stage and a stage adjacent thereto, but no sampling switch and no data line are provided for the other of the two branches corresponding to the path between the first end-stage and the stage adjacent thereto and between the second end-stage and the stage adjacent thereto; and
wherein pixels, which correspond to the sampling switches and data lines provided in correspondence with the one of the two branches corresponding to the path between the first end-stage and the stage adjacent thereto and/or between the second end-stage and the stage adjacent thereto, the first end-stage and the second end-stage being at opposite ends of the pixel matrix, are controlled to display as dummy pixel regions.

2. The electro-optical device according to Claim 1, wherein the pixels in the dummy pixel regions are symmetrically located with respect to a center of an effective pixel region for performing display.

3. The electro-optical device according to Claim 2, wherein the number of the data lines of an effective pixel region of the pixel matrix is a multiple of the number of the sampling switches turned on and off by the same sampling signal.

4. The electro-optical device according to Claim 1, wherein the operation circuit, that corresponds to the other of the two branches corresponding to the path between the first end-stage and the stage adjacent thereto, comprises a NOT circuit (141) that receives an input of the pulse signal transmitted by the first end-stage of the shift register, but not an input of the corresponding enable signal.

5. The electro-optical device according to Claim 4, wherein the operation circuit, that corresponds to the other of the two branches corresponding to the path between the second end-stage and the stage adjacent thereto, comprises a NOT circuit (141) that receives an input of the pulse signal transmitted by the second end-stage of the shift register, but not an input of the corresponding enable signal.

## Patentansprüche

1. Elektro-optische Vorrichtung mit Pixeln, die in einer Pixelmatrix angeordnet sind, die Schnittpunkten von Abtastleitungen und Datenleitungen entspricht, um Grauskala-Abstufungen als Reaktion auf Bildsignale zu erzeugen, die auf einer Bildsignalleitung (171) zugeleitet werden, wenn Bildsignale auf den Datenleitungen für eine Periode abgetastet werden, während welcher jede der mehreren Abtastleitungen ausgewählt ist, wobei die Datenleitungen in Blöcken geformt sind, die aus mehreren Datenleitungen bestehen, wobei die elektro-optische Vorrichtung umfasst:
eine Abtastleitungstreiberschaltung (130) um sequentiell die mehreren Abtastleitungen für jede entsprechende horizontale Abtastperiode zu wählen;
ein Schieberegister, das aus mehreren Stufen (1450) besteht, die miteinander verbunden sind, um sequentiell ein Pulssignal zu übertragen, das zu Beginn jeder horizontalen Abtastperiode entsprechend einem vorgegebenem Taktsignal zugeleitet wird, wobei die Stufen eine erste Endstufe und eine zweite Endstufe an entgegengesetzten Enden des Schieberegisters enthalten;
Operationsschaltungen (142-146) um mehrere Abtastsignale (Sl-a bis S130-b) zu generieren, durch das Ausführen logischer Operationen an jedem der Pulssignale, die von den Stufen des Schieberegisters ausgegeben werden, und an vorgegebenen Freigabesignalen, so dass Pulse, die von den mehreren Abtastsignalen übertragen werden, einander nicht überlappen; und
mehrere Abtastschalter (148), die von den Abtastsignalen gesteuert werden, wobei jeder Abtastschalter elektrisch zwischen eine entsprechende der Datenleitungen und die Bildsignalleitung zum Einschalten und Abtasten der Bildsignale, die der Bildsignalleitung zugeleitet werden, auf die Datenleitungen eingesetzt ist, wobei Abtastschalter, die Datenleitungen entsprechen, die zu demselben der Blöcke gehören, im Wesentlichen zur selben Zeit durch dasselbe Abtastsignal eingeschaltet und ausgeschaltet werden;
wobei ein Pfad zum Übertragen des Pulssignals von einer Stufe zu einer benachbarten Stufe für jede der Stufen vorgesehen ist, wobei jeder Pfad ferner an zwei Abzweigungen angeschlossen ist, jede Abzweigung das Pulssignal überträgt, jede der zwei Abzweigungen an eine der Operationsschaltungen angeschlossen ist;
wobei die Operationsschaltungen so angeordnet sind, dass sie die logischen Operationen an den abgezweigten Pulssignale durchführen und die, einem entsprechenden Block von Datenleitungen zugeordneten, Abtastschalter betätigen;
**dadurch gekennzeichnet, dass**:
die Abtastschalter und die Datenleitungen in Übereinstimmung mit einer der zwei Abzweigungen, die einem Pfad zwischen der ersten Endstufe und einer daran angrenzenden Stufe sowie zwischen der zweiten Endstufe und einer daran angrenzenden Stufe entspricht, vorgesehen sind, aber keine Abtastschalter und keine Datenleitungen für die andere der zwei Abzweigungen vorgesehen sind, die dem Pfad zwischen der ersten Endstufe und der daran angrenzenden Stufe sowie zwischen der zweiten Endstufe und der daran angrenzenden Stufe entspricht; und
wobei Pixel, die den Abtastschaltern und Datenleitungen entsprechen, die in Übereinstimmung mit der einen der zwei Abzweigungen, vorgesehen sind, die dem Pfad zwischen der ersten Endstufe und der daran angrenzenden Stufe und/oder zwischen der zweiten Endstufe und der daran angrenzenden Stufe entspricht, wobei die erste Endstufe und die zweite Endstufe an entgegengesetzten Enden der Pixelmatrix liegen, zur Anzeige als Scheinpixelregionen gesteuert werden.

2. Elektro-optische Vorrichtung nach Anspruch 1, wobei die Pixel in den Scheinpixelregionen in Bezug auf einen Mittelpunkt einer effektiven Pixelregion zur Ausführung der Anzeige symmetrisch angeordnet sind.

3. Elektro-optische Vorrichtung nach Anspruch 2, wobei die Anzahl der Datenleitungen einer effektiven Pixelregion der Pixelmatrix ein Vielfaches der Anzahl der durch dasselbe Abtastsignal eingeschalteten und ausgeschalteten Abtastschalter ist.

4. Elektro-optische Vorrichtung nach Anspruch 1, wobei die Betriebsschaltung, die der anderen der zwei Abzweigungen entspricht, die dem Pfad zwischen der ersten Endstufe und der daran angrenzenden Stufe entspricht, eine NICHT-Schaltung (141) enthält, die einen Eingang des Pulssignals, das durch die erste Endstufe des Schieberegisters übertragen wird, aber keinen Eingang des entsprechenden Freigabesignals empfängt.

5. Elektro-optische Vorrichtung nach Anspruch 4, wobei die Betriebsschaltung, die der anderen der zwei Abzweigungen entspricht, die dem Pfad zwischen der zweiten Endstufe und der daran angrenzenden Stufe entspricht, eine NICHT-Schaltung (141) enthält, die einen Eingang des Pulssignals, das durch die zweite Endstufe des Schieberegisters übertragen wird, aber keinen Eingang des entsprechenden Freigabesignals empfängt.

## Revendications

1. Dispositif électro-optique ayant des pixels disposés en une matrice de pixels correspondant à des intersections entre des lignes de balayage et des lignes de données, afin de produire des niveaux d'échelle des gris en réponse à des signaux d'image fournis sur une ligne de signaux d'image (171) lorsque des signaux d'image sont échantillonnés sur les lignes de données sur une période pendant laquelle chacune de la pluralité des lignes de balayage est sélectionnée, lesdites lignes de données étant formées en blocs se composant d'une pluralité de lignes de données, le dispositif électro-optique comprenant :
un circuit d'attaque de ligne de balayage (130) pour sélectionner séquentiellement la pluralité des lignes de balayage pour chaque période de balayage horizontal respective ;
un registre à décalage se composant d'une pluralité d'étages (1450) qui sont connectés les uns aux autres de manière à transmettre séquentiellement un signal impulsionnel fourni au début de chaque période de balayage horizontal en fonction d'un signal d'horloge prédéterminé, les étages incluant un premier étage d'extrémité et un second étage d'extrémité à des extrémités opposées du registre à décalage ;
des circuits d'exploitation (142-146) pour générer une pluralité de signaux d'échantillonnage (S1-a à S130-b) en effectuant des opérations logiques pour chacun des signaux impulsionnels émis par les étages du registre à décalage et des signaux de validation prédéterminés, de manière à ce que des impulsions transmises par la pluralité des signaux d'échantillonnage ne se superposent pas les unes aux autres ; et
une pluralité de commutateurs d'échantillonnage (148) contrôlés par lesdits signaux d'échantillonnage, chaque commutateur d'échantillonnage étant intercalé électriquement entre l'une desdites lignes de données correspondante et la ligne de signaux d'image, afin d'activer et échantillonner les signaux d'image fournis à la ligne de signaux d'image sur les lignes de données, dans lequel des commutateurs d'échantillonnage correspondant à des lignes de données appartenant au même desdits blocs sont allumés et éteints sensiblement en même temps par le même signal d'échantillonnage ;
dans lequel un trajet pour transmettre le signal impulsionnel d'un étage à un étage adjacent à celui-ci est fourni pour chacun des étages, chaque trajet étant en outre connecté à deux ramifications, chaque ramification transmettant le signal impulsionnel, chacune desdites deux ramifications étant connectée à l'un desdits circuits d'exploitation ;
dans lequel lesdits circuits d'exploitation sont étudiés pour effectuer lesdites opérations logiques pour les signaux impulsionnels ramifiés et pour actionner lesdits commutateurs d'échantillonnage associés à un dit bloc respectif de lignes de données ;
**caractérisé en ce que** :
les commutateurs d'échantillonnage et les lignes de données sont fournis en correspondance avec l'une des deux ramifications correspondant à un trajet entre le premier étage d'extrémité et un étage d'extrémité adjacent à celui-ci et entre le second étage d'extrémité et un étage adjacent à celui-ci, mais **en ce que** aucun commutateur d'échantillonnage et aucune ligne de données ne soient fournis pour l'autre des deux ramifications correspondant au trajet entre le premier étage d'extrémité et l'étage d'extrémité adjacent à celui-ci et entre le second étage d'extrémité et l'étage adjacent à celui-ci ; et
dans lequel des pixels, lesquels correspondent aux commutateurs d'échantillonnage et aux lignes de données fournis en correspondance avec celle des deux ramifications correspondant au trajet entre le premier étage d'extrémité et l'étage d'extrémité adjacent à celui-ci et/ou entre le second étage d'extrémité et l'étage adjacent à celui-ci, le premier étage d'extrémité et le second étage d'extrémité se trouvant à des extrémités opposées de la matrice de pixels, sont contrôlés afin d'afficher en tant que zones de pixels factices.

2. Dispositif électro-optique selon la revendication 1, dans lequel les pixels dans les zones de pixels factices sont situés symétriquement par rapport à un centre d'une zone de pixels effectifs pour effectuer l'affichage.

3. Dispositif électro-optique selon la revendication 2, dans lequel le nombre de lignes de données d'une zone de pixels effectifs de la matrice de pixels est un multiple du nombre de commutateurs d'échantillonnage allumés et éteints par le même signal d'échantillonnage.

4. Dispositif électro-optique selon la revendication 1, dans lequel le circuit d'exploitation, qui correspond à l'autre des deux ramifications correspondant au trajet entre le premier étage d'extrémité et l'étage adjacent à celui-ci, comprend un circuit NON (141) qui reçoit une entrée du signal impulsionnel transmis par le premier étage d'extrémité du registre à décalage, mais pas une entrée du signal de validation correspondant.

5. Dispositif électro-optique selon la revendication 4, dans lequel le circuit d'exploitation, lequel correspond à l'autre des deux ramifications correspondant au trajet entre le second étage d'extrémité et l'étage adjacent à celui-ci, comprend un circuit NON (141) qui reçoit une entrée du signal impulsionnel transmis par le second étage d'extrémité du registre à décalage, mais pas une entrée du signal de validation correspondant.
